# EUROPÄISCHE PATENTANMELDUNG

(11) **EP 3 269 945 A1**
(43) Veröffentlichungstag der Anmeldung: **17.01.2018**
(21) Anmeldenummer: 16179379.9
(22) Anmeldetag: 14.07.2016
(51) Int. Cl.: F01D 25/04, F01D 25/28, F16D 3/00, F01D 15/10, F16C 23/00

(54) **VERFAHREN UND VORRICHTUNG ZUR AUSRICHTUNG EINES WELLENSTRANGS**

(71) Anmelder: Siemens Aktiengesellschaft, 80333 München (DE)
(72) Erfinder: Kostenko, Yevgen, 40878 Ratingen (DE); Koerdt, Markus, 47509 Rheurdt (DE); Mahnke, Rene, 45468 Mülheim an der Ruhr (DE); De Roo, Stephan, 40477 Düsseldorf (DE); Drees, Sven, 41466 Neuss (DE); Hamann, Axel, 45479 Mülheim an der Ruhr (DE); Langer, Marcel, 46149 Oberhausen (DE); Minninger, Dieter, 46535 Dinslaken (DE); Pfaller, Dirk, 45149 Essen (DE); Plaumann, Ralf, 45896 Gelsenkirchen (DE); Schlüter, Dennis, 46569 Hünxe (DE); Sievert, Roland, 47199 Duisburg (DE); Ulma, Andreas, 45481 Mülheim an der Ruhr (DE)

(57) **Zusammenfassung**

Die Erfindung betrifft einen Wellenstrang (1) mit einer Anhebevorrichtung (10), die derart ausgebildet ist, dass die Lager des Wellenstranges (1) individuell angesteuert werden können, wodurch Schwingungen während des Betriebs minimiert werden können.

## Beschreibung

Die Erfindung betrifft eine Vorrichtung umfassend einen Wellenstrang, der eine Antriebseinheit, ein Lager sowie eine Dreheinheit aufweist, die über eine gemeinsame Welle drehmomentübertragend gekoppelt sind, mit einer Anhebevorrichtung, die zum Ausrichten des Wellenstrangs ausgebildet ist.

Desweiteren betrifft die Erfindung ein Verfahren zur Reduzierung von Schwingungen in einem Wellenstrang, wobei der Wellenstrang mit einer Antriebseinheit, insbesondere einer Dampfturbine, einer Dreheinheit, insbesondere einem Generator sowie einem Lager ausgebildet wird.

Kraftwerke werden zur Energieversorgung eingesetzt und unter anderem mit Dampfturbinen, Gasturbinen sowie Generatoren betrieben. Im Wesentlichen wird in solchen Kraftwerken die thermische Energie eines Strömungsmediums größtenteils in Rotationsenergie eines Rotors umgewandelt, der schließlich in einem Generator in elektrische Energie umgewandelt wird. Zu dieser Umwandlung ist es erforderlich, eine Dampfturbine und eine Gasturbine drehmomentübertragend mit einem Generator zu koppeln. Beim Einsatz einer Dampfturbine und einer Gasturbine sind sogenannte Einwellenanlagen als Ausführungsformen eines Wellenstranges bekannt. Dabei weist die Dampfturbine, die Gasturbine und der Generator eine gemeinsame Welle auf. In der Regel sind Kupplungen zwischen dem Generator und der Gasturbine angeordnet. Es sind aber auch Ausführungsformen bekannt, bei der eine Kupplung zwischen dem Generator und der Dampfturbine angeordnet wird. Desweiteren sind Lager erforderlich, die den Wellenstrang derart abstützen, dass während des Betriebs keine störenden Schwingungen auftreten.

Daher muss ein Wellenstrang ausgerichtet werden, was derzeit nach einer komplexen Vorgehensweise erfolgt, da zunächst die Ausrichtung berechnet wird, um die technischen Randbedingungen nach Lagerlast oder Kupplungsklaffungen einzuhalten. Zu diesen Berechnungen kommen Erfahrungen und Berechnungen hinzu hinsichtlich thermischer Dehnungen des Fundaments, auf dem die Lager angeordnet sind oder thermische Dehnungen des Gehäuses. Mit diesen Daten kann ein Ergebnis berechnet werden, wonach die Lagerhöhen für einen Nennbetrieb optimal sind.

Während der Inbetriebnahme erfolgt eine Neuausrichtung des Wellenstranges, sofern störende Schwingungen ermittelt werden. Die Korrektur der Ausrichtung erfolgt dabei durch Unterlegen mit Blechen. Sofern die Lagergehäuse fest mit dem Fundament verbunden sind, sind solche Korrekturen nur im Stillstand möglich, was einen sehr hohen Aufwand bedeutet, da das Lagergehäuse demontiert werden muss.

Die Kraftwerke werden heutzutage unterschiedlich betrieben. Zum einen können die Kraftwerke im Dauerbetrieb betrieben werden. Durch die Einspeisung regenerativer Energien in das elektrische Versorgungsnetz sind allerdings auch Betriebsweisen bekannt, bei der ein tägliches Hoch- und Runterfahren des Turbosatzes erfolgt. Grade das tägliche Hoch- und Runterfahren des Turbosatzes hat einen thermischen Einfluss auf die optimale Ausrichtung des Wellenstranges und ist dabei nicht zu vernachlässigen. Für wechselnde Betriebsweisen ist es daher schwierig eine optimale Ausrichtung zu realisieren. Dies hat zur Folge, dass das Schwingungsverhalten und eventuell auftretende Spaltverschiebungen den Wirkungsgrad der Anlage verschlechtern.

Sobald Schwingungen auftreten, die oberhalb eines kritischen Wertes liegen, muss die gesamte Anlage heruntergefahren und abgekühlt werden. Eine Neuausrichtung des Wellenstranges erfolgt dann im Stillstand, was durch das Einsetzen von Unterlegblechen erfolgt.

Solch eine Vorgehensweise ist zeit- und kostenintensiv. An dieser Stelle setzt die Erfindung an, deren Aufgabe es ist, eine Vorrichtung und ein Verfahren anzugeben, bei dem eine Ausrichtung eines Wellenstranges schnell und kostengünstig durchgeführt werden kann.

Gelöst wird diese Aufgabe durch eine Vorrichtung umfassend einen Wellenstrang, der eine Antriebseinheit, ein Lager sowie eine Dreheinheit aufweist, die über eine gemeinsame Welle drehmomentübertragend gekoppelt sind, mit einer Anhebevorrichtung, die zum Ausrichten des Wellenstrangs ausgebildet ist, wobei die Anhebevorrichtung derart ausgebildet ist, dass das Ausrichten des Wellenstranges während des Betriebs erfolgt.

Die Aufgabe wird desweiteren gelöst durch ein Verfahren zur Reduzierung von Schwingungen in einem Wellenstrang, wobei der Wellenstrang mit einer Antriebseinheit, insbesondere Dampfturbine, einer Dreheinheit, insbesondere einem Generator sowie einem Lager ausgebildet wird, wobei eine Anhebevorrichtung eingesetzt wird, mit der die Höhe des Lagers verändert werden kann, wobei die Anhebevorrichtung derart ausgebildet wird, dass die Höhe des Lagers während des Betriebes verändert werden kann.

Erfindungsgemäß wird somit vorgeschlagen, eine Vorrichtung einzusetzen, die eine Anhebevorrichtung aufweist, die während des Betriebes ein Heben des Lagers ermöglicht. Vorteilhafte Weiterbildungen sind in den Unteransprüchen angegeben, die in beliebiger Weise miteinander kombiniert werden können.

In einer ersten vorteilhaften Weiterbildung ist das Lager auf Lagerböcken angeordnet, wobei die Anhebevorrichtung zum Temperieren der Lagerblöcke ausgebildet ist. Vorgeschlagen wird somit, die Wellenstrangausrichtung während des Betriebes durch eine gezielte Temperierung der Lagerböcke zu verändern. Insbesondere in Bereichen mit einer Doppellagerung führt dies zu einer signifikanten Verbesserung der Wellenstrangausrichtung.

Weiterhin wird erfindungsgemäß vorgeschlagen, die Lagerböcke derart auszubilden, dass Bohrungen zum Zuführen von Temperierfluid, insbesondere Öl oder Wasser angeordnet sind.

Im Betrieb strömt Schmieröl mit einer Temperatur von 50°C bis 60°C durch die Lagerböcke. Durch erfindungsgemäß vorgeschlagene eingebrachte Bohrungen kann bei Bedarf Kühlwasser, das zum Beispiel aus dem Kühlwasserkreislauf der Kraftwerksanlage kommt, in das Unterteil des Lagers geleitet werden. Durch diese Maßnahme ist eine stufenlose Veränderung während des Betriebes möglich. Die Eigenschaften des Lagerbocks wie zum Beispiel die Grundsteifigkeit oder Schwingungsdämpfungen werden dadurch kaum beeinflusst. Zudem ist diese erfindungsgemäße vorgeschlagene Lösung bei bestehenden Anlagen günstig und schnell nachzurüsten.

In einer weiteren vorteilhaften Weiterbildung weisen die Lagerböcke Heizpatronen, insbesondere elektrische Heizpatronen zum Temperieren auf.

In einer weiteren vorteilhaften Weiterbildung ist die Anhebevorrichtung derart ausgebildet, dass eine Kraftübertragung auf das Lager hydraulisch erfolgt.

Hierzu wird erfindungsgemäß vorgeschlagen, unter ein oder unter jedes Lager eine hydraulische Einrichtung anzuordnen, die eine Kraftübertragung auf das Lager zur Folge haben.

In einer weiteren vorteilhaften Weiterbildung ist die Anhebevorrichtung derart ausgebildet, dass eine Kraftübertragung auf das Lager über zwei zueinander verschiebbarer Teile erfolgt.

Durch zueinander verschiebbare Teile ist eine präzise Höhenverstellung möglich. In einer weiteren vorteilhaften Weiterbildung umfasst die Vorrichtung ein erstes und ein zweites Lager, wobei die Anhebevorrichtung zum Heben und Senken des ersten und des zweiten Lagers ausgebildet ist.

In einer besonders vorteilhaften Weiterbildung ist die Anhebevorrichtung derart weitergebildet, dass diese einen Regler umfasst, der zum Ansteuern einer einheitlichen Höhenverstellung des ersten und zweiten Lagers ausgebildet ist, wobei der Regler ferner dazu ausgebildet ist in Abhängigkeit von auftretenden Schwingungen des Wellenstrangs über eine Ausgleichsvorrichtung die Höhen des ersten und zweiten Lagers unterschiedlich ausführen. Als Eingangsgröße für den Regler werden Schwingungen des Lagers ermittelt, wobei diese Größe in den Regler einfließt.

In einer weiteren vorteilhaften Weiterbildung ist die Ausgleichsvorrichtung als Ausgleichswaage ausgebildet.

In einer weiteren vorteilhaften Weiterbildung weist das Lager einen Grundkörper auf, der auf den Lagerbock angeordnet ist sowie einen Kugelkörper, der über dem Grundkörper angeordnet ist, wobei ein hydraulischer Flachzylinder zum Anheben des Kugelkörpers zwischen dem Grundkörper und dem Kugelkörper angeordnet ist.

In einer weiteren vorteilhaften Weiterbildung ist ein erster hydraulischer Flachzylinder und ein zweiter hydraulischer Flachzylinder nebeneinander angeordnet.

In einer weiteren vorteilhaften Weiterbildung wird die Vorrichtung derart ausgebildet, dass zwei gegenläufige Keile über eine gemeinsame Spindel positionierbar sind, wobei gegenüber den Keilen jeweils eine schräge Anlegefläche eines Hebeelementes angeordnet ist, wobei die Spindel und die Keile derart ausgebildet sind, dass ein Drehen der Spindel zu einem Anheben des Hebeelementes führt.

In einer weiteren vorteilhaften Weiterbildung umfasst die Anhebevorrichtung Piezoaktoren. Mit Piezoaktoren ist eine besonders schnelle und leichte Möglichkeit gegeben, durch Anlegen einer Spannung die Höhe des Lagers während des Betriebes zu verändern.

Vorteilhafterweise sind unter einem Lager zumindest zwei Piezoaktoren angeordnet. Vorteilhafterweise weist das Lager Niederhalter auf, wobei die Piezoaktoren unter den Niederhaltern angeordnet sind.

In einer weiteren vorteilhaften Weiterbildung umfasst das Lager einen Lagerring, wobei zwischen dem Lagerring und der Welle mehrere auf dem Umfang verteilte Piezoaktoren angeordnet sind.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Es zeigen:
- Figur 1: eine schematische Darstellung eines Wellenstranges,
- Figur 2: eine schematische Darstellung eines ersten Ausführungsbeispiels der Erfindung,
- Figur 3: eine schematische Darstellung eines zweiten Ausführungsbeispiels der Erfindung,
- Figur 4: eine schematische Darstellung eines dritten Ausführungsbeispiels der Erfindung,
- Figur 5: eine schematische Darstellung eines vierten Ausführungsbeispiels der Erfindung,
- Figur 6: eine schematische Darstellung eines fünften Ausführungsbeispiels der Erfindung,
- Figur 7: eine schematische Darstellung eines sechsten Ausführungsbeispiels der Erfindung,
- Figur 8: eine schematische Darstellung eines siebten Ausführungsbeispiels der Erfindung,
- Figur 9: eine andere Darstellung des siebten Ausführungsbeispiels der Erfindung,
- Figur 10: eine schematische Darstellung eines achten Ausführungsbeispiels der Erfindung,
- Figur 11: eine schematische Darstellung eines Details des achten Ausführungsbeispiels der Erfindung,
- Figur 12: eine schematische Darstellung eines neunten Ausführungsbeispiels der Erfindung.

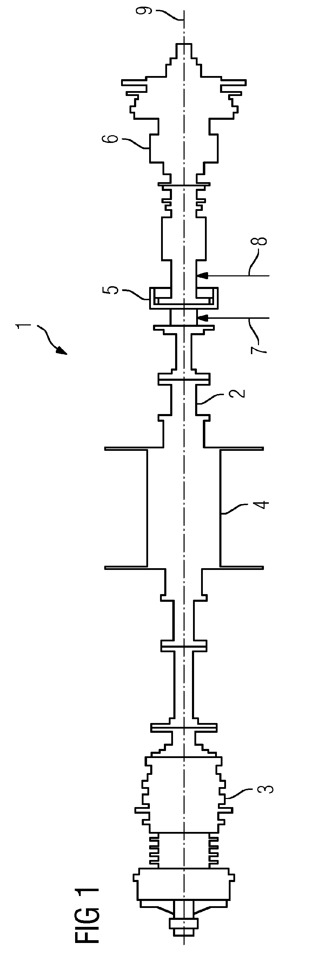

Figur 1 zeigt eine schematische Darstellung eines Wellenstranges 1. Der Wellenstrang 1 umfasst unter anderem eine gemeinsame Welle 2, die aus mehreren Einzelkomponenten gebildet ist, die drehmomentübertragend miteinander gekoppelt sind. Zum einen umfasst die Welle 2 eine Dampfturbinenwelle 3, die drehmomentübertragend mit einer Generatorwelle 4 gekoppelt ist. Über eine Kupplung 5 ist eine Gasturbinenwelle 6 drehmomentübertragend gekoppelt.

Der gesamte Wellenstrang 1 ist auf einem nicht näher dargestellten Fundament aufgestellt. Desweiteren sind mehrere Lager angeordnet, die den Wellenstrang auf dem Fundament ortsstabil anordnen. Die Lager sind in der Figur 1 nicht explizit dargestellt, die Pfeile 7 und 8 geben beispielsweise den Ort eines ersten und eines zweiten Lagers an. Im Betrieb rotiert der Wellenstrang 1 um eine Rotationsache 9. Während des Betriebs können Schwingungen auftreten, die dadurch gedämpft werden können, indem die Lager höhenverstellbar ausgebildet werden. Dazu wird erfindungsgemäß eine Vorrichtung beschrieben, die beispielsweise an den Stellen Pfeil 7 und Pfeil 8 eine Höhenverstellung realisieren, wodurch Schwingungen reduziert werden können.

Der Wellenstrang 1 weist eine als Dampfturbine ausgebildete Antriebseinheit und eine als Generator ausgebildete Dreheinheit auf. Die erfindungsgemäße Vorrichtung ist durch eine Anhebevorrichtung 10 charakterisiert, die in der Figur 1 nicht näher dargestellt ist.

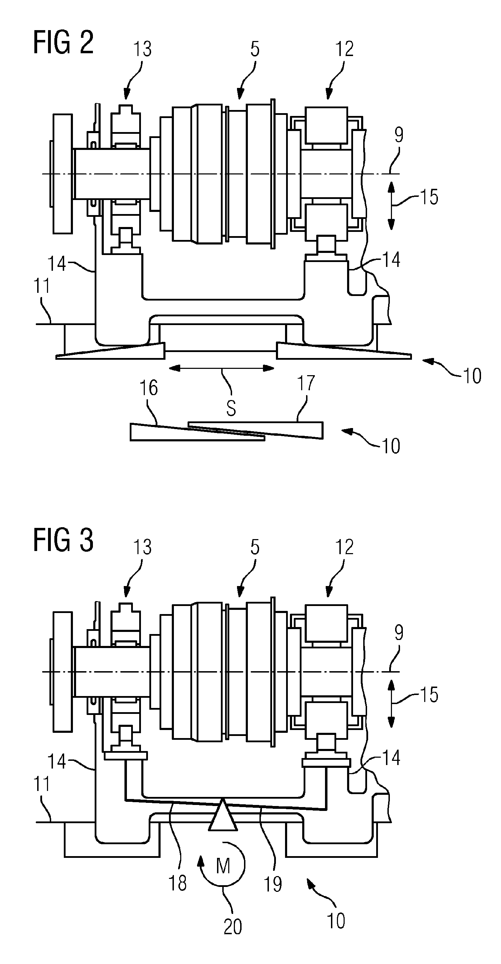

In der Figur 2 ist ein Teil des Wellenstranges 1 dargestellt. Ein auf dem Fundament 11 angeordnetes erstes Lager 13 und ein zweites Lager 12 bilden einen Teil des Wellenstranges. Rechts von dem zweiten Lager 12 ist, wie aus Figur 1 ersichtlich, die Gasturbinenwelle 6 angeordnet. Links von dem ersten Lager 13 ist wie aus Figur 1 ersichtlich die Generatorwelle 4 angeordnet. Das Lager 12, 13 umfasst einen Lagerbock 14. Die Lagerböcke 14 sind hierbei derart ausgebildet, dass sie durch externe Heiz- oder Kühlelemente temperiert werden können. Durch die thermische Ausdehnung des Lagerbocks 14 ist eine Höhenverstellung in vertikaler Richtung möglich. Die Temperierung erfolgt hierbei durch das Zuführen über Bohrungen (nicht dargestellt) von Temperierfluid, das insbesondere Öl oder Wasser sein kann, realisiert. Das Temperierfluid weist hierbei entweder eine erhöhte oder eine niedrige Temperatur auf, die zu einer thermischen Ausdehnung des Lagerbocks 14 führt.

In einer alternativen Ausführungsform kann auch das Fundament durch das Einbringen von Kühl- oder Heizschlangen temperiert werden, um die Ausrichtung des Lagers 12 zu beeinflussen. Zusätzlich oder alternativ können die Lagerböcke 14 Heizpatronen (nicht dargestellt), insbesondere elektrische Heizpatronen zum Temperieren aufweisen.

In einer zusätzlichen Variante kann der Lagerbock 14 mit einem Material ausgebildet sein, das einen deutlich höheren Wärmeausdehnungskoeffizienten aufweist. Beispielsweise könnte hier Zink als alternatives Material verwendet werden.

In der Figur 2 ist eine weitere Darstellung der Anhebevorrichtung 10 dargestellt. Die Anhebevorrichtung 10 gemäß Figur 2 ist durch zwei zueinander verschiebbare Keile 16 und 17 charakterisiert. Hierbei wird ein erster Keil 16 gegen einen zweiten Keil 17 in der Rotationsachenrichtung 9 gegeneinander verschoben. Durch das Verschieben erfolgt eine Kraftübertragung in vertikaler Richtung 15. Hierbei werden der erste Keil 16 und der zweite Keil 17 zwischen dem Lager und dem Fundament angeordnet. Das Verschieben des ersten Keils 16 gegen den zweiten Keil 17 erfolgt hierbei während des Betriebs.

Die Figur 3 zeigt eine weitere Ausführung der Anhebevorrichtung 10. Hierbei wird die Anhebevorrichtung 10 mittels einer Ausgleichswaage 18 ausgebildet. Die Ausgleichswaage 18 umfasst im Wesentlichen eine Balkenwaage 19 und eine Motorvorrichtung 20, mit der die Balkenwaage 19 derart angesteuert werden kann, dass die Kräfte in vertikaler Richtung 15 auf das erste Lager 12 und das zweite Lager 13 unterschiedlich ausgeführt werden können.

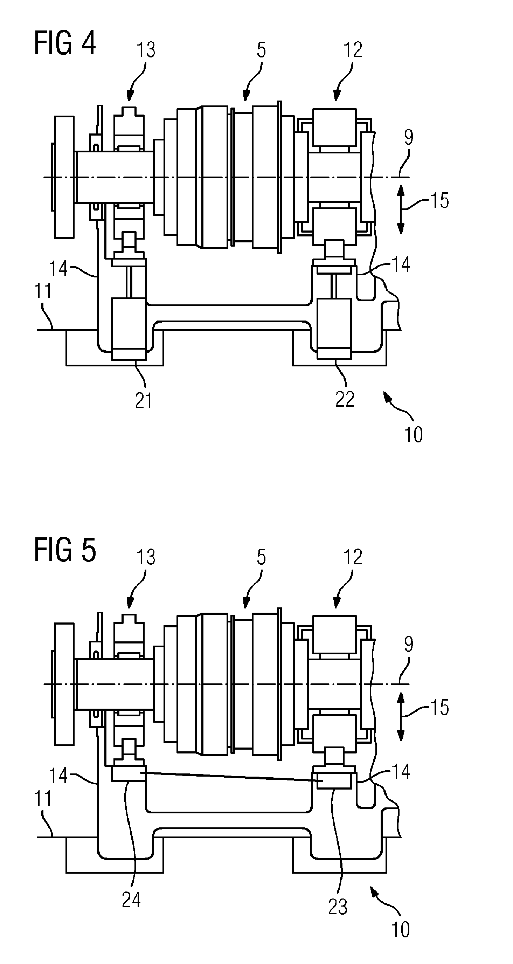

Die Figur 4 zeigt eine weitere Ausführungsform einer Anhebevorrichtung 10. Die Anhebevorrichtung 10 umfasst einen ersten Hydraulikstempel 21, der unter das erste Lager 13 und einen zweiten Hydraulikstempel 22, der unter das zweite Lager 12 angeordnet ist. Durch den ersten Hydraulikstempel 21 und den zweiten Hydraulikstempel 22 ist eine Kraftübertragung auf das erste Lager 13 bzw. zweite Lager 12 unabhängig voneinander möglich. Die Kraftübertragung erfolgt über hydraulische Kräfte. Die Hydraulik ist in der Figur 4 nicht näher dargestellt.

Der erste Hydraulikstempel 21 und der zweite Hydraulikstempel 22 sind unter dem ersten Lager 13 und dem zweiten Lager 12 auf dem Fundament 11 angeordnet.

Die Figur 5 zeigt eine weitere Ausführungsform der Anhebevorrichtung 10. Die Anhebevorrichtung 10 gemäß Figur 5 zeichnet sich durch ein erstes Temperierpaket 24 und ein zweites Temperierpaket 23 aus, das durch eine Temperiermöglichkeit, die in der Figur 5 durch ein großes T dargestellt wird, temperiert werden können. Die Temperierung führt zu einer thermischen Ausdehnung der Temperierpakete 23, 24, was zu einer Höhenverschiebung in vertikaler Richtung 15 des ersten Lagers 13 und des zweiten Lagers 12 führt. Das erste Temperierpaket 24 ist hierbei unter das erste Lager 13 auf dem Fundament 11 angeordnet. Das zweite Temperierpaket 23 ist unter dem zweiten Lager 12 auf dem Fundament 11 angeordnet.

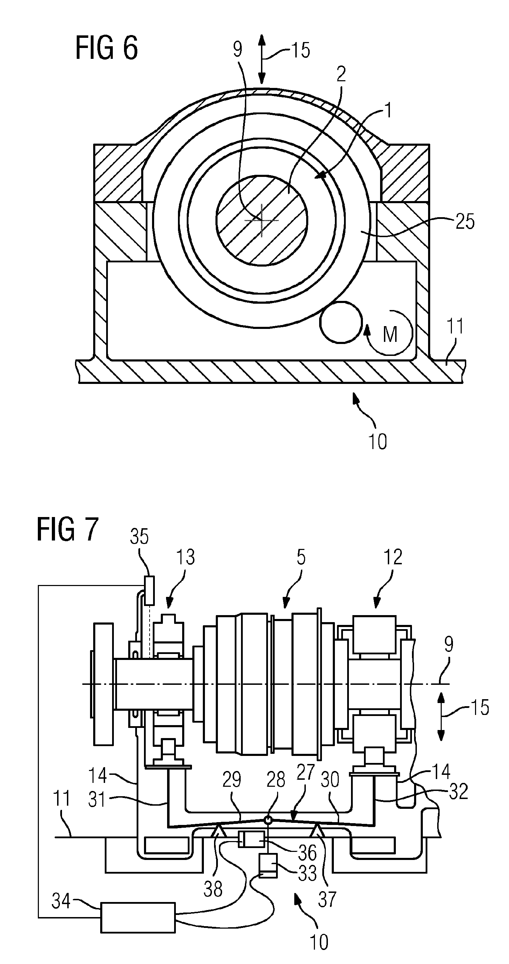

Die Figur 6 zeigt eine weitere Ausführungsform der Anhebevorrichtung 10. Die Anhebevorrichtung 10 gemäß Figur 5 zeichnet sich dadurch aus, dass ein Ring 25 um die Welle 2 angeordnet ist. Dieser Ring 25 wird über eine Motordreheinrichtung 26 in eine Drehung versetzt. Diese Drehung des Rings 25 der in Uhrzeigerrichtung bzw. gegen die Uhrzeigerrichtung erfolgen kann, führt zu einem Anheben oder einem Senken in vertikaler Richtung 15 der Lager 12 bzw. 13.

Die Figur 7 zeigt eine weitere Ausführungsform einer Anhebevorrichtung 10. Die Anhebevorrichtung 10 umfasst eine als Balkenwaage ausgeführte Ausgleichsvorrichtung 27. Diese Ausgleichsvorrichtung 27 kann um einen Drehpunkt 28 gedreht werden. Die Ausgleichsvorrichtung 27 weist einen ersten Arm 29 und einen zweiten Arm 30 auf, die um den Drehpunkt 28 gedreht werden können. Der erste Arm 29 ist mit einem ersten Höhenarm 31 gekoppelt, wobei über den ersten Höhenarm 31 eine Kraft in vertikaler Richtung 15 auf das Lager 13 ausgeübt werden kann. Der zweite Arm 30 weist an seinem Ende einen zweiten Höhenarm 32 auf, der eine Kraft in vertikaler Richtung 15 auf das zweite Lager 12 ausüben kann.

Die Anhebevorrichtung 10 weist desweiteren eine erste Hebeeinrichtung 33, die an den Drehpunkt 28 angreift und dazu führt, dass die Ausgleichsvorrichtung 27 in vertikaler Richtung 15 verschoben werden kann. Die erste Hebeeinrichtung 33 ist mit einem Regler 34 signaltechnisch gekoppelt. Der Regler 34 empfängt ein Signal aus einem Schwingungsmesser 35, der die Schwingungen der Welle 2 erfasst. Diese Signale werden in dem Regler 34 verarbeitet und führen zu einem Aufgangssignal an die erste Hebeeinrichtung 33, die eine Höhenverstellung der Ausgleichseinrichtung 27 bewirkt. Zudem ist eine zweite Hebeeinrichtung 36 angeordnet, die ebenfalls ein Signal aus dem Regler 34 erfährt und zu einer Verschiebung der Ausgleichsvorrichtung 27 über einen ersten Aufleger 37 und zweiten Aufleger 38 führt.

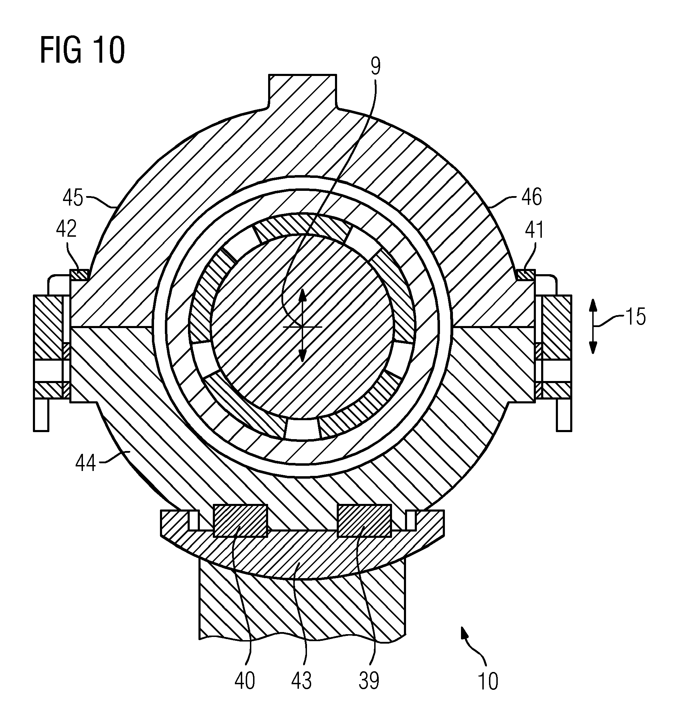

Die Figur 10 zeigt eine weitere Ausführungsform der Anhebevorrichtung 10. Hierbei wird die Anhebevorrichtung 10 mittels eines ersten hydraulischen Flachzylinder 39 und einem zweiten hydraulischen Flachzylinder 40 zwischen einem Grundkörper 43 und einem Kugelkörper 44 des Lagers angeordnet. Die separate Ansteuerung des ersten hydraulischen Flachzylinders, des zweiten hydraulischen Flachzylinders 40, des dritten hydraulischen Flachzylinders 41 und des vierten hydraulischen Flachzylinders 42 führen zu einer optimalen Ausrichtung des Wellenstrangs 1. Der dritte hydraulische Flachzylinder 41 und der vierte hydraulische Flachzylinder 43 werden an Niederhaltern 45, 46 angeordnet.

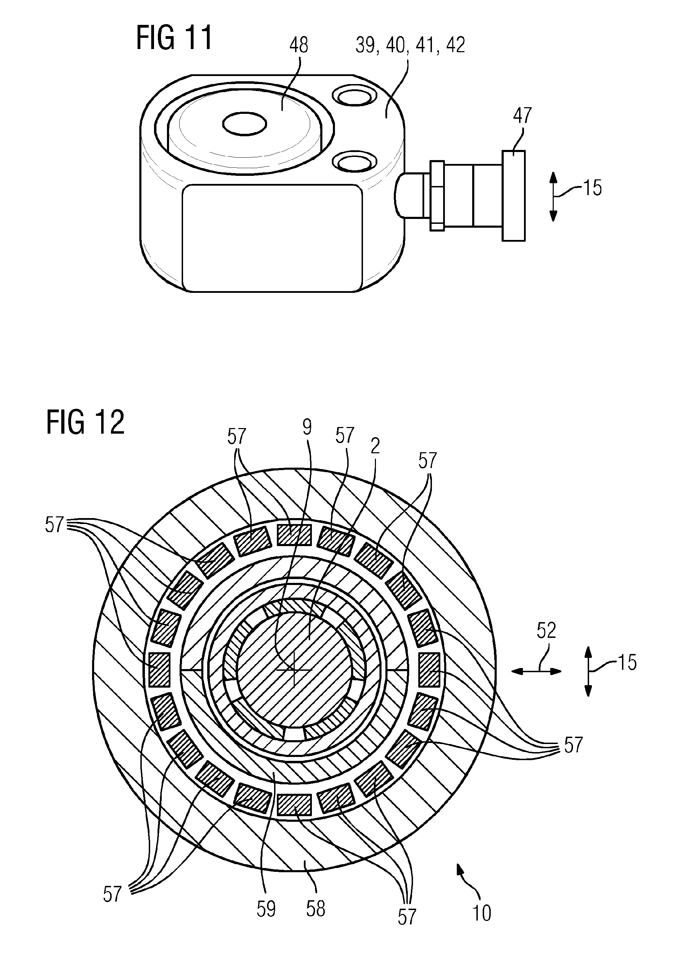

Die Figur 11 zeigt im Detail ein Ausführungsbeispiel eines hydraulischen Flachzylinders, der als erster, zweiter, dritter oder vierter Flachzylinder eingesetzt werden kann. Der Flachzylinder ist über einen hydraulischen Anschluss 47 ansteuerbar, wodurch sich ein Hydraulikstempel 48 in einer vertikalen Richtung 15 ausfahren lässt.

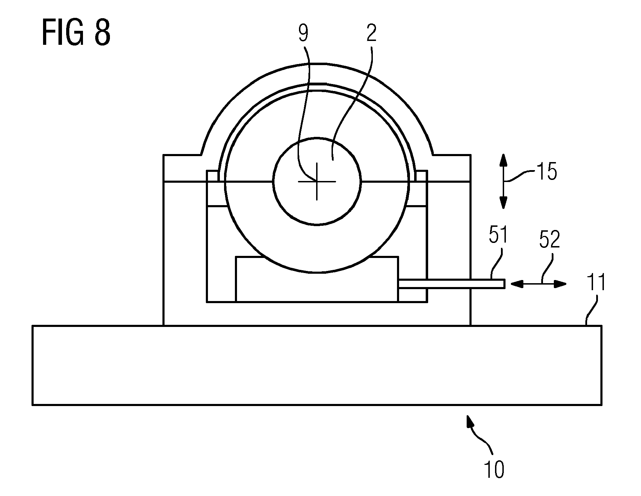

Die Figur 8 zeigt eine weitere Ausführungsform einer Anhebevorrichtung 10.

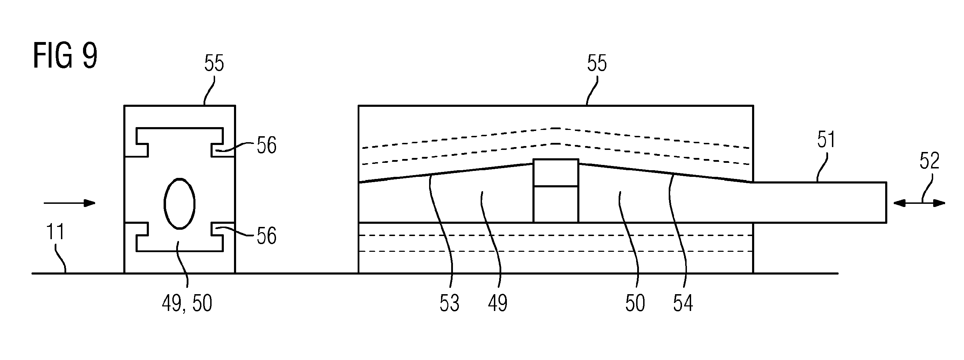

Die Anhebevorrichtung 10 in dieser Variante weist wie in Figur 9 zu sehen, zwei gegenläufige Keile 48 und 50 auf, die über eine gemeinsame Spindel 51 in einer horizontalen Richtung 52 positionierbar sind. Der erste Keil 49 und der zweite Keil 50 sind in der Figur 8 nicht näher dargestellt. Die Keile 49 und 50 sind jeweils über einer schrägen Anlegefläche 53 und 54 eines Hebeelementes 55 angeordnet. Die Spindel 51 und die Keile 49, 50 sind derart ausgebildet, dass ein Drehen der Spindel 51 zu einem Anheben des Hebeelementes 55 führt. Dazu bewegen sich die Keile 49 und 50 in der horizontalen Richtung 52 voneinander weg oder aufeinander zu.

In der Detailansicht von Figur 9 links von der Darstellung des Hebeelementes mit dem ersten und zweiten Keil ist eine Querschnittsansicht des Hebeelementes und der Keile 49, 50 dargestellt. Die Keile 49, 50 sind hierbei in Führungsschienen 56 angeordnet, um ein einseitiges Verrutschen zu verhindern.

Solch eine Anhebevorrichtung 10 kann sowohl unter dem ersten Lager 13 als auch unter dem zweiten Lager 12 angeordnet werden, um eine Anhebung in vertikaler Richtung 15 zu ermöglichen.

Die Figur 12 zeigt eine weitere Variante der Anhebevorrichtung 10. Die Anhebevorrichtung 10 gemäß Figur 12 umfasst Piezoaktoren 57. Die Piezoaktoren 57 können unter das erste Lager 13 und das zweite Lager 12 angeordnet werden. Durch Anlegen einer Spannung an die Piezoaktoren, ist eine Anhebung in vertikaler Richtung 15 der Lager möglich. Gemäß Figur 12 ist die Anhebevorrichtung 10 derart ausgebildet, dass das Lager einen Lagerring 58 umfasst. Zwischen dem Lagerring 58 und einem Innenring 59 sind die Piezoaktoren 57 in einer Umfangsrichtung angeordnet. Eine individuelle Ansteuerung der Piezoaktoren führt zu einem Verschieben des Außenrings gegenüber dem Innenring. Diese Verschiebung kann dazu genutzt werden, das Lager bezogen auf die Rotationsachse individuell anzupassen.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung umfassend
einen Wellenstrang (1), der eine Antriebseinheit, ein Lager sowie eine Dreheinheit aufweist, die über eine gemeinsame Welle drehmomentübertragend gekoppelt sind,
mit einer Anhebevorrichtung (10), die zum Ausrichten des Wellenstrangs (1) ausgebildet ist,
**dadurch gekennzeichnet, dass**
die Anhebevorrichtung (10) derart ausgebildet ist, dass das Ausrichten des Wellenstrangs (1) während des Betriebs erfolgt,
wobei das Ausrichten durch das Heben oder Setzen des Lagers mittels der Anhebevorrichtung (10) erfolgt.

2. Vorrichtung nach Anspruch 1,
wobei das Lager auf Lagerböcken (14) angeordnet ist,
wobei die Anhebevorrichtung (10) zum Temperieren der Lagerböcke (14) ausgebildet ist.

3. Vorrichtung nach Anspruch 2,
wobei die Lagerböcke (14) Bohrungen zum Zuführen von Temperierfluid,
insbesondere Öl oder Wasser, aufweisen.

4. Vorrichtung nach Anspruch 2,
wobei die Lagerböcke (14) Heizpatronen,
insbesondere elektrische Heizpatronen zum Temperieren aufweisen.

5. Vorrichtung nach Anspruch 1,
wobei die Anhebevorrichtung (10) derart ausgebildet ist,
dass eine Kraftübertragung auf das Lager hydraulisch erfolgt.

6. Vorrichtung nach Anspruch 1,
wobei die Anhebevorrichtung (10) derart ausgebildet ist,
dass eine Kraftübertragung auf das Lager über zwei zueinander verschiebbare Keile (49, 50) erfolgt.

7. Vorrichtung nach Anspruch 1,
wobei die Vorrichtung ein erstes Lager (13) und ein zweites Lager (12) umfasst und die Anhebevorrichtung (10) zum Heben und Senken des ersten Lagers (13) und des zweiten Lagers (12) ausgebildet ist.

8. Vorrichtung nach Anspruch 7,
wobei die Anhebevorrichtung (10) einen Regler (34) umfasst,
der zum Ansteuern einer einheitlichen Höhenverstellung des ersten (13) und zweiten Lagers (12) ausgebildet ist, wobei der Regler (34) ferner dazu ausgebildet ist, in Abhängigkeit von auftretenden Schwingungen des Wellenstrangs (1) über eine Ausgleichseinrichtung (27) (Balkenwaage (19)) die Höhen des ersten (13) und zweiten Lagers (12) unterschiedlich auszuführen.

9. Vorrichtung nach Anspruch 8,
wobei die Ausgleichseinrichtung (27) als Ausgleichswaage (18) ausgebildet ist.

10. Vorrichtung nach Anspruch 5,
wobei das Lager einen Grundkörper (43) aufweist, der auf dem Lagerbock (14 angeordnet ist sowie einen Kugelkörper (44), der über dem Grundkörper (43) angeordnet ist,
wobei ein hydraulischer Flachzylinder (39, 40, 41, 42) zum Anheben des Kugelkörpers (44) zwischen dem Grundkörper (43) und dem Kugelkörper (44) angeordnet ist.

11. Vorrichtung nach Anspruch 10,
wobei ein erster hydraulischer Flachzylinder (39) und ein zweiter hydraulischer Flachzylinder (40) nebeneinander angeordnet sind.

12. Vorrichtung nach Anspruch 6,
wobei zwei gegenläufige Keile (49, 50) über eine gemeinsame Spindel (51) positionierbar sind,
wobei gegenüber den Keilen (49, 50) jeweils eine schräge Anlegefläche eines Hebeelements (55) angeordnet ist, wobei die Spindel (51) und die Keile (49, 50) derart ausgebildet sind, dass ein Drehen der Spindel (51) zu einem Anheben des Hebeelements (55) führt.

13. Vorrichtung nach Anspruch 1,
wobei die Anhebevorrichtung (10) Piezoaktoren (57) umfasst.

14. Vorrichtung nach Anspruch 13,
wobei unter einem Lager zumindest zwei Piezoaktoren (57) angeordnet sind.

15. Vorrichtung nach Anspruch 13 oder 14,
wobei das Lager Niederhalter(45, 46) umfasst und unter den Niederhaltern (45, 46) Piezoaktoren (57) angeordnet sind.

16. Vorrichtung nach einem der Anspruch 13 oder 14,
wobei das Lager einen Lagerring (58) umfasst und zwischen dem Lagerring (58) und der Welle (2) mehrere auf dem Umfang verteilte Piezoaktoren (57) angeordnet sind.

17. Verfahren zur Reduzierung von Schwingungen in einem Wellenstrang (1),
wobei der Wellenstrang (1) mit einer Antriebseinheit, insbesondere Dampfturbine, einer Dreheinheit, insbesondere einem Generator sowie einem Lager ausgebildet wird,
wobei eine Anhebevorrichtung (10) eingesetzt wird, mit der die Höhe des Lagers verändert werden kann,
wobei die Anhebevorrichtung (10) derart ausgebildet wird, dass die Höhe des Lagers während des Betriebs verändert wird.
